# FASCICULE DE BREVET EUROPEEN

(11) **EP 3 947 914 B1**
(45) Date de publication et mention de la délivrance du brevet: **30.08.2023**
(21) Numéro de dépôt: 20726205.6
(22) Date de dépôt: 16.03.2020
(51) Int. Cl.: F01D 1/26, F01D 21/00, F02C 3/067, F02K 3/072, F04D 19/02

(54) **TURBINE CONTRAROTATIVE D'UNE TURBOMACHINE D'AERONEF ET PROCÉDÉ DE CONTRÔLE NON DESTRUCTIF D'UN ROTOR D'UNE TURBINE CONTRAROTATIVE**
GEGENLÄUFIGE TURBINE FÜR EINE LUFTFAHRTTURBOMASCHINE UND ZERSTÖRUNGSFREIES INSPEKTIONSVERFAHREN FÜR EINE GEGENLÄUFIGE TURBINE
COUNTER-ROTATING TURBINE OF AN AIRCRAFT TURBOMACHINE AND NON-DESTRUCTIVE INSPECTION METHOD FOR A COUNTER-ROTATING TURBINE

(30) Priorité: 25.03.2019 FR 1903092
(43) Date de publication de la demande: 09.02.2022
(73) Titulaire: SAFRAN AIRCRAFT ENGINES, 75015 Paris (FR)
(72) Inventeur: SULTANA, Patrick, Jean, Laurent, 77550 MOISSY-CRAMAYEL (FR); MARTET, Renaud, James, 77550 MOISSY-CRAMAYEL (FR); ROTENBERG, Maxime, Aurélien, 77550 MOISSY-CRAMAYEL (FR)
(74) Mandataire: Gevers & Orès
(86) Numéro de dépôt international: PCT/FR2020/050549
(87) Numéro de publication internationale: WO 2020/193905

(56) Documents cités:
- EP-A1- 3 182 085
- FR-A1- 2 876 444
- FR-A1- 3 015 750
- US-A1- 2017 219 815
- US-A1- 2019 085 725

## Description

### Domaine technique de l'invention

L'invention se rapporte au domaine des turbomachines d'aéronef, et plus précisément à un procédé de contrôle non destructif d'un rotor d'une turbine contra rotative d'une turbomachine.

### Arrière-plan technique

L'état de la technique comporte notamment les demandes de brevet US-A1-2019/085725, EP-A1-3 182 085, US-A1-2017/219815, FR-A1-2 876 444 A1 et FR-A1-3 015 750.

De façon connue, une turbomachine d'aéronef comprend d'amont en aval, dans le sens d'écoulement des gaz, une soufflante, un compresseur basse pression, un compresseur haute pression, une chambre de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

Dans le cadre de la maintenance d'une turbomachine, il est nécessaire de réaliser des opérations de contrôle non destructif des pièces de la turbomachine.

Ce contrôle non destructif peut être réalisé au moyen d'un endoscope, qui est un instrument optique allongé, en forme de tube, par exemple souple, qui loge des moyens optiques de transmission d'images depuis une de ses extrémités jusqu'à des moyens de visualisation des images. Un tel endoscope est généralement introduit dans la turbomachine par un orifice d'endoscopie, par exemple formé sur un carter de la turbomachine. L'endoscope est introduit au niveau d'un stator de la turbomachine, et le rotor est mis en rotation de manière à acquérir des images du rotor sur 360°. Un tel endoscope est relié de manière filaire aux moyens de visualisation des images. Les demandes de brevet FR 2 771 515 A1 et FR 2 975 771 A1 décrivent des dispositifs et procédés d'endoscopie avec des tels endoscopes.

Dans certaines turbomachines, la turbine basse pression peut être une turbine contrarotative. Dans ce cas, la turbine contrarotative basse pression comporte deux rotors contrarotatifs imbriqués l'un dans l'autre. Un premier rotor est configuré pour tourner dans un premier sens de rotation et est relié à un premier arbre de turbine, et un deuxième rotor est configuré pour tourner dans un sens de rotation opposé au premier sens de rotation et est relié à un deuxième arbre de turbine. Le premier rotor est relié au premier arbre de turbine par un tambour interne, et le deuxième rotor est relié au deuxième arbre de turbine un tambour externe. Le premier rotor comporte des roues à aubes intercalées entre des roues à aubes du deuxième rotor. En particulier, le deuxième rotor est agencé radialement autour du premier rotor, et un carter est agencé radialement autour du deuxième rotor. Il n'y a généralement pas de partie statique dans la veine formée entre le premier et le deuxième rotor.

Une architecture à turbine contrarotative basse pression permet de réduire le nombre d'étages de la turbine basse pression par rapport aux turbines basse pression conventionnelles.

Pour les architectures à turbine contrarotative basse pression, se pose le problème de l'endoscopie de l'ensemble des aubages des premier et deuxième rotors de la turbine contrarotative basse pression. En effet, la solution conventionnelle d'insérer un endoscope par un orifice d'endoscopie dans le stator de la turbine basse pression et la rotation d'un rotor de la turbine basse pression n'est plus possible. En effet, comme les premier et deuxième rotors de la turbine contrarotative basse pression sont liés par un réducteur dénommé la PGB (acronyme de l'expression anglaise « Power Gear Box »), il n'est pas possible de faire tourner un rotor dans un sens, sans faire tourner l'autre rotor dans le sens opposé.

L'invention a pour objectif de proposer une solution permettant de remédier à au moins certains de ces inconvénients.

En particulier, la présente invention propose un dispositif d'endoscopie non filaire qui permet de visualiser des éléments de la turbomachine non accessibles si le ou les rotors de la turbine contra rotative basse pression sont mobiles en rotation.

### Résumé de l'invention

À cet effet, l'invention concerne une turbine contrarotative d'une turbomachine d'aéronef, comprenant :
- un carter comportant au moins un orifice d'endoscopie configuré pour le passage d'un bouchon d'endoscopie d'un dispositif de contrôle non destructif à l'intérieur dudit carter, ledit dispositif de contrôle non destructif comprenant ledit bouchon d'endoscopie adapté pour être fixé dans un orifice d'endoscopie d'un rotor radialement externe de la turbine contrarotative, ledit bouchon d'endoscopie comportant des moyens d'acquisition et de transmission d'images configurés pour acquérir des images du rotor et pour envoyer lesdites images acquises, et des moyens de réception et d'affichage d'images configurés pour recevoir et pour afficher lesdites images acquises, lesdits moyens de réception et d'affichage d'images sont connectés auxdits moyens d'acquisition et de transmission d'images au moyen d'une connexion sans-fil,
- un premier rotor, dit rotor radialement interne, relié à un premier arbre de turbine et configuré pour tourner dans un premier sens de rotation,
- un deuxième rotor, dit rotor radialement externe, relié à un deuxième arbre de turbine et configuré pour tourner dans un sens de rotation opposé au premier sens de rotation,

ledit deuxième rotor étant agencé radialement autour dudit premier rotor,
ledit carter étant agencé radialement autour dudit deuxième rotor,
et étant caractérisée en ce que ledit rotor radialement externe présente un orifice d'endoscopie dans lequel le bouchon d'endoscopie du dispositif de contrôle non destructif est fixé de manière amovible.

Avantageusement, le dispositif de contrôle non destructif selon l'invention est un dispositif d'endoscopie non filaire permettant de visualiser des pièces du rotor interne d'une turbine contrarotative non accessibles même si ce rotor interne est mobile en rotation, ce qui ne peut être réalisé avec un dispositif d'endoscopie selon l'art antérieur. En effet, les dispositifs d'endoscopie selon l'art antérieur sont filaires, et ne permettent donc pas de faire tourner les deux rotors de la turbine contrarotative sans emmêler ou casser les fils optiques.

Le bouchon d'endoscopie peut être adapté pour être fixé de manière amovible dans l'orifice d'endoscopie du rotor radialement externe de la turbine contrarotative. En particulier, le bouchon d'endoscopie peut présenter un filetage extérieur, et l'orifice d'endoscopie du peut être au moins en partie un orifice taraudé. Dans ce cas, le bouchon d'endoscopie est adapté pour être vissé dans l'orifice d'endoscopie.

La connexion entre les moyens de réception et d'affichage d'images et les moyens d'acquisition et de transmission d'images peut être réalisée par Wi-Fi ou Bluetooth.

Le bouchon d'endoscopie peut comprendre une empreinte apte à recevoir une clé pour permettre de visser et/ou de dévisser le bouchon d'endoscopie.

Le rotor radialement externe de la turbine contrarotative peut présenter un bossage qui s'étend en saillie radialement vers l'extérieur et autour de l'orifice d'endoscopie. Dans ce cas, le bouchon d'endoscopie peut être adapté pour être fixé sur ce bossage.

L'orifice d'endoscopie du carter peut également être configuré pour le passage de la clé qui permet de visser et/ou de dévisser le bouchon d'endoscopie.

Le bossage peut présenter un filetage agencé dans le prolongement de l'orifice d'endoscopie. Dans ce cas, le bouchon d'endoscopie peut être vissé sur le bossage.

L'invention concerne également une turbomachine d'aéronef comportant une turbine contra rotative selon l'invention.

La turbine contra rotative peut être une turbine contra rotative basse pression.

L'invention concerne également un procédé de contrôle non destructif d'un rotor d'une turbine contrarotative selon l'invention au moyen d'un dispositif de contrôle non destructif, caractérisé en ce que ledit procédé comprend les étapes consistant en :
- une mise en place du bouchon d'endoscopie dans l'orifice d'endoscopie du rotor radialement externe de la turbine contrarotative,
- une rotation des premier et deuxième rotors de la turbine contrarotative et une acquisition d'images du rotor radialement interne de la turbine contrarotative, au moyen des moyens d'acquisition d'images,
- une transmission desdites images acquises aux moyens de réception d'images, au moyen d'une communication sans-fil.

La rotation des premier et deuxième rotors de la turbine contrarotative peut être manuelle ou assistée.

Le procédé peut comprendre, préalablement à la mise en place du bouchon d'endoscopie dans l'orifice d'endoscopie du rotor radialement externe de la turbine contrarotative, les étapes consistant en :
- un démontage d'un bouchon d'un orifice d'endoscopie du carter de la turbine contrarotative, et
- un démontage d'un bouchon d'un orifice d'endoscopie du rotor radialement externe de la turbine contrarotative, ledit bouchon étant retiré par l'orifice d'endoscopie du carter de la turbine contrarotative,
et, lors de la mise en place du bouchon d'endoscopie dans l'orifice d'endoscopie du rotor radialement externe de la turbine contrarotative, ledit bouchon d'endoscopie est inséré à travers l'orifice d'endoscopie du carter de la turbine contrarotative.

Le procédé peut comprendre, lors de la mise en place du bouchon d'endoscopie dans l'orifice d'endoscopie du rotor radialement externe de la turbine contra rotative, un vissage du bouchon d'endoscopie sur le bossage.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1a] la figure 1a est une vue en coupe semi-axiale très schématique d'un mode de réalisation d'une turbomachine d'aéronef à turbine contra rotative basse pression,
[Fig. 1b] la figure 1b est une vue en coupe semi-axiale très schématique d'un autre mode de réalisation d'une turbomachine d'aéronef à turbine contra rotative basse pression,
[Fig. 2] la figure 2 est une vue en coupe semi-axiale très schématique d'une turbine contra rotative selon l'invention,
[Fig. 3] la figure 3 est une vue en coupe d'une partie d'une turbine contra rotative selon l'invention,
[Fig. 4] la figure 4 est une vue en coupe d'une partie d'une turbine contra rotative selon l'invention, et
[Fig. 5] la figure 5 représente très schématiquement un dispositif de contrôle non destructif selon l'invention.

Les éléments ayant les mêmes fonctions dans les différentes mises en oeuvre ont les mêmes références dans les figures.

### Description détaillée de l'invention

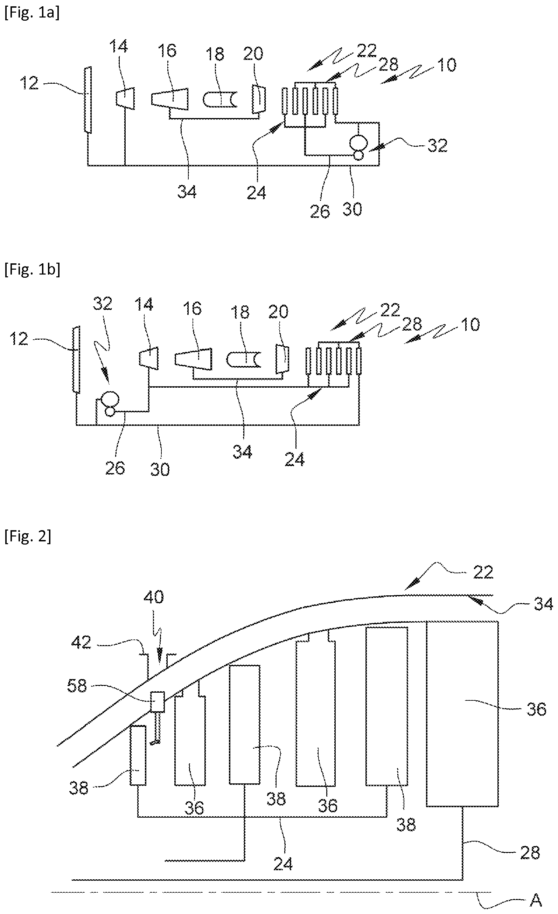

Les figures 1a et 1b représentent une turbomachine d'aéronef comportant une turbine contra rotative basse pression. La turbomachine peut être un turbopropulseur ou un turboréacteur.

La turbomachine 10 comprend d'amont en aval, dans le sens d'écoulement des gaz, une soufflante 12, un compresseur basse pression 14, un compresseur haute pression 16, une chambre de combustion 18, une turbine haute pression 20 et une turbine contra rotative basse pression 22.

La turbine contrarotative basse pression 22 comporte un premier rotor 24 qui est relié à un premier arbre de turbine 26 et qui est configuré pour tourner dans un premier sens de rotation. La turbine contrarotative basse pression 22 comporte également un deuxième rotor 28 qui est relié à un deuxième arbre de turbine 30 et qui est configuré pour tourner dans un sens de rotation opposé au premier sens de rotation. Les premier et deuxième rotors 24, 28 sont liés par un boîtier de réduction 32, qui est agencé entre la turbine contrarotative basse pression 22 et la soufflante 12.

Le rotor du compresseur haute pression 16 est entraîné par le rotor de la turbine haute pression 20. Le rotor du compresseur basse pression 14 est entraîné par un des rotors de la turbine contrarotative basse pression 22. Sur la figure 1a, le deuxième rotor 28 est relié au compresseur basse pression 14 et à la soufflante 12. Sur la figure 1b, le premier rotor 24 est relié au compresseur basse pression 14 et le deuxième rotor 28 est relié à la soufflante 12.

La turbine contrarotative basse pression 22 comprend ainsi un rotor dit lent et un rotor dit rapide, le rotor lent étant configuré pour entraîner la soufflante 12 et le rotor rapide étant configuré pour entraîner le compresseur basse pression 14 et pouvant engrener avec le boîtier de réduction, qui peut comprendre un réducteur mécanique par exemple à train épicycloïdal.

Sur la figure 1b, le boîtier de réduction relie le rotor rapide et le rotor lent, ce qui permet un transfert de puissance du rotor rapide vers le rotor lent. Il est ainsi possible de profiter des avantages d'un compresseur basse pression 14 rapide, tout en fournissant de l'énergie à la soufflante 12.

La figure 2 représente une turbine contra rotative basse pression 22, qui comporte également un carter 34 agencé radialement autour du deuxième rotor 28 par rapport à l'axe de la turbomachine, noté A sur la figure 2.

Le deuxième rotor 28, dit rotor radialement externe, est agencé radialement autour du premier rotor 24, dit rotor radialement interne, par rapport à l'axe A de la turbomachine.

Chaque rotor 24, 28 comporte des roues à aubes 36, 38. Les roues à aubes 36 du rotor radialement externe 28 sont intercalées entre les roues à aubes 38 du rotor radialement interne 24.

Le carter 34 de la turbine contrarotative basse pression 22 peut comporter un ou une pluralité d'orifices d'endoscopie 40 configurés pour le passage d'un dispositif de contrôle non destructif d'une pièce agencée à l'intérieur du carter, par exemple un endoscope. Le nombre d'orifices d'endoscopie 40 dans le carter 34 dépend du nombre de zones à l'intérieur du carter 34 pour lesquelles une endoscopie est souhaitée. Par exemple, il peut y avoir entre un et dix orifices d'endoscopie 40 pour la turbine ou entre un et deux orifices d'endoscopie 40 par étage de turbine. Un orifice d'endoscopie 40 peut être de forme cylindrique à base circulaire, ovale, polygonale ou quelconque. Sur la figure 2, seul un orifice d'endoscopie 40 a été représenté, mais le carter 34 peut comporter une pluralité d'orifices d'endoscopie 40.

Un orifice d'endoscopie 40 peut être formé dans un bossage 42, qui est fixé sur le carter 34, et qui présente un orifice interne qui communique avec l'orifice d'endoscopie 40 du carter 34. Un bossage 42 est un organe qui est rapporté et fixé sur le carter 34 au niveau de chaque orifice d'endoscopie 40 de manière à définir un bossage en saillie sur la surface externe du carter 34. En général, il y a autant de bossage 42 que d'orifice d'endoscopie 40.

L'orifice interne du bossage 42 peut être un orifice taraudé. Autrement dit, l'orifice interne peut présenter un filetage interne. L'orifice interne être de forme cylindrique à base circulaire, ovale, polygonale ou quelconque. L'orifice interne peut être aligné avec l'orifice d'endoscopie 40. Plus précisément, l'orifice interne et l'orifice d'endoscopie 40 peuvent être coaxiaux.

Un bossage 42 peut être soudé sur le carter 34.

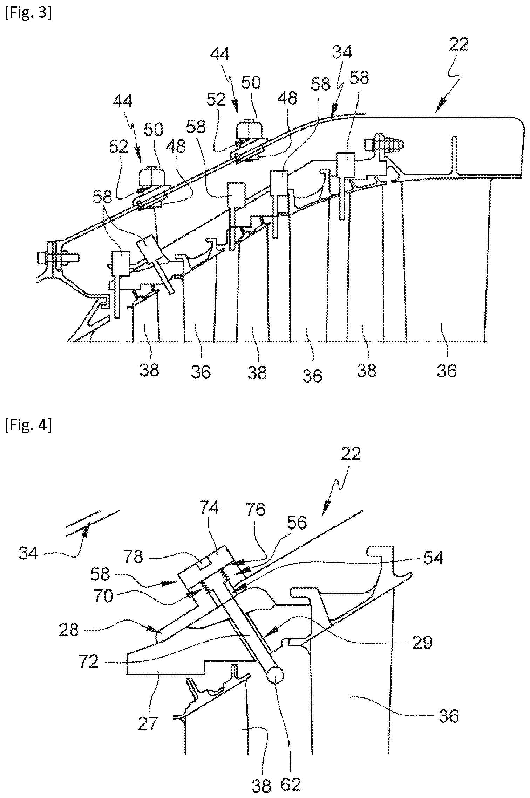

La figure 3 représente plus précisément une partie de la turbine contrarotative basse pression 22.

Afin d'assurer l'étanchéité du carter 34, les bossages 42 du carter 34 sont pourvus de bouchons 44 agencés de manière à obturer les orifices d'endoscopie 40. Chaque orifice d'endoscopie 40 est associé à un bouchon 44. Autrement dit, chaque orifice d'endoscopie 40 est apte à recevoir un bouchon 44. Le bouchon 44 peut être dans une position montée, dans laquelle le bouchon 44 est porté sur le carter 34 et ferme l'orifice d'endoscopie 40, ou dans une position démontée, dans laquelle le bouchon 44 est retiré du carter 34 et l'orifice d'endoscopie est dégagé de manière à permettre le passage d'un endoscope.

Un bouchon 44 est amovible dans un bossage 42.

Un bouchon 44 peut comprendre un tronc 48 fileté extérieurement, qui est apte à coopérer avec l'orifice interne taraudé du bossage 42 avec lequel communique l'orifice d'endoscopie 40 du carter 34. Un bouchon 44 peut comprendre une tête 50 dont le diamètre est supérieur au diamètre du tronc 48. Le tronc 48 et la tête 50 du bouchon 44 peuvent être cylindriques, à base circulaire, ovale, polygonale ou quelconque.

Le diamètre de la tête 50 est supérieur au diamètre de l'orifice d'endoscopie 40 et de l'orifice interne du bossage 42, de sorte que, lorsque le bouchon 44 est inséré dans l'orifice d'endoscopie 40, la tête 50 reste à l'extérieur du carter 34 et le tronc 48 soit dans l'orifice d'endoscopie 40, c'est-à-dire à l'intérieur du carter 34.

Le bouchon 44 peut présenter des moyens d'anti-desserrage, de sorte à maintenir le bouchon 44 sur le carter 34.

Le bossage 42 est délimité radialement par une surface interne et une surface externe (non représentées). La surface interne du bossage 42 est soudée sur le carter 34, et la surface externe du bossage 42 est en contact avec le bouchon du carter 34. À la jonction entre la tête 50 et le tronc 48 du bouchon 44, le bouchon 44 comprend une surface 52 qui vient en butée contre la surface externe du bossage 42 lorsque le bouchon 44 se trouve en position montée.

Un bouchon 44, et plus précisément la tête 50 du bouchon 44, peut comprendre une empreinte (non représentée) apte à recevoir une clé pour permettre de visser et/ou de dévisser le bouchon 44 du bossage 42.

Le rotor radialement externe 28 de la turbine contrarotative basse pression 22 peut comporter un ou une pluralité d'orifices d'endoscopie (non visible sur les figures 2 et 3, référence 54 sur la figure 4) configurés pour le passage d'un endoscope. Le nombre d'orifice d'endoscopie 54 dans le rotor radialement externe 28 dépend du nombre de zones à l'intérieur du rotor radialement externe 28, et donc du nombre de zones du rotor radialement interne 24, pour lesquelles une endoscopie est souhaitée. Chaque orifice d'endoscopie 54 débouche à l'intérieur du rotor radialement externe entre deux aubes 36, 38. Un orifice d'endoscopie 54 peut être de forme cylindrique à base circulaire, ovale, polygonale ou quelconque.

Un orifice d'endoscopie 40 peut être formé dans un bossage 56, qui est fixé sur le rotor radialement externe 28, et qui présente un orifice interne qui communique avec l'orifice d'endoscopie 54 du rotor radialement externe 28. Les bossages 56 sont agencés de sorte qu'il y ait un bossage 56 par rangée d'aubes 36, 38. Il y a autant de bossage 56 que l'orifice d'endoscopie 54.

L'orifice interne du bossage 56 peut être un orifice taraudé de forme cylindrique à base circulaire, ovale, polygonale ou quelconque. L'orifice interne et l'orifice d'endoscopie 54 peuvent être alignés, et plus précisément coaxiaux.

Un bossage 56 peut être soudé sur le rotor radialement externe 28.

Le rotor radialement externe 28 comporte un tambour qui s'étend autour d'un anneau d'étanchéité (non référencé sur la figure 3, référence 27 sur la figure 4). L'anneau d'étanchéité 27 est fixé au tambour du rotor radialement externe 28. L'anneau 27 comporte un orifice (non référencé sur la figure 3, référence 29 sur la figure 4) qui est coaxial avec l'orifice d'endoscopie 54. L'anneau 27 comporte une partie externe métallique et une partie interne en matériau abradable. Ces deux parties interne et externe de l'anneau 27 sont percées de l'orifice 29.

Afin d'assurer l'étanchéité du rotor radialement externe 28, les bossages 56 du rotor radialement externe 28 sont pourvus de bouchons (non représentés) agencés de manière à obturer les orifices d'endoscopie 54. Chaque orifice d'endoscopie 54 est associé à un bouchon, qui est amovible dans un bossage 56.

Le bouchon du rotor radialement externe 28 peut comprendre un tronc fileté extérieurement, qui est apte à coopérer avec l'orifice interne taraudé du bossage 56 avec lequel communique l'orifice d'endoscopie 54 du rotor radialement externe 28. En position du bouchon dans l'orifice d'endoscopie 54, le tronc du bouchon obstrue également l'orifice 29 de l'anneau d'étanchéité 27. Le bouchon peut comprendre une tête dont le diamètre est supérieur au diamètre du tronc. Le tronc et la tête du bouchon du rotor radialement externe 28 peuvent être cylindriques, à base circulaire, ovale, polygonale ou quelconque.

Le diamètre de la tête du bouchon du rotor radialement externe 28 est supérieur au diamètre de l'orifice d'endoscopie 54 et de l'orifice interne du bossage 56, de sorte que, lorsque le bouchon est inséré dans l'orifice d'endoscopie 54, la tête reste à l'extérieur du rotor radialement externe 28 et le tronc soit dans l'orifice d'endoscopie 54, c'est-à-dire à l'intérieur du rotor radialement externe 28.

Le bouchon du rotor radialement externe 28 peut présenter des moyens d'anti-desserrage, de sorte qu'il est maintenu sur le rotor radialement externe 28.

Le bossage 56 est délimité radialement par une surface interne et une surface externe (non représentées). La surface interne du bossage 56 est soudée sur le rotor radialement externe 28, et la surface externe du bossage 56 est en contact avec le bouchon du rotor radialement externe 28. À la jonction entre la tête et le tronc du bouchon du rotor radialement externe 28, le bouchon comprend une surface qui vient en butée contre la surface externe du bossage 56 lorsque le bouchon se trouve en position montée.

Un bouchon du rotor radialement externe 28, et plus précisément la tête du bouchon, peut comprendre une empreinte (non représentée) apte à recevoir une clé pour permettre de visser et/ou de dévisser le bouchon du bossage 56.

La figure 4 représente plus précisément une partie de la turbine contrarotative basse pression 22 au cours d'une endoscopie.

Afin de réaliser une endoscopie du rotor radialement interne 24 de la turbine contrarotative basse pression 22, un dispositif de contrôle non destructif peut être utilisé.

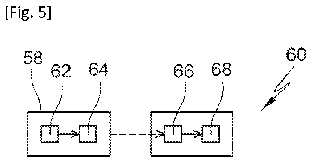

La figure 5 représente un dispositif de contrôle non destructif 60.

Le dispositif de contrôle non destructif 60 comprend un bouchon d'endoscopie 58 adapté pour être fixé dans un orifice d'endoscopie 54 du rotor radialement externe 28 de la turbine contrarotative basse pression 22. Plus précisément, le bouchon d'endoscopie 58 peut être fixé de manière amovible dans l'orifice d'endoscopie 54 du rotor radialement externe 28.

Le bouchon d'endoscopie 58 comporte des moyens d'acquisition d'images 62 configurés pour acquérir des images du rotor radialement interne 24, et des moyens de transmission d'images 64 configurés pour envoyer lesdites images acquises. Les moyens d'acquisition d'images 62 peuvent être une caméra. Les moyens d'acquisition d'images 62 sont fixés sur le bouchon d'endoscopie 58. Les moyens d'acquisition d'images 62 et les moyens de transmission d'images 64 peuvent communiquer entre eux au moyen d'une connexion filaire. Bien entendu, ces moyens peuvent communiquer au moyen d'une connexion sans-fil.

Le dispositif de contrôle non destructif 60 comprend également des moyens de réception d'images 66 configurés pour recevoir les images acquises par les moyens d'acquisition d'images 62 et transmises par les moyens de transmission d'images 64, et des moyens d'affichage d'images 68 configurés pour afficher lesdites images reçues par les moyens de réception d'images 66. Les moyens de réception d'images 66 et les moyens d'affichage d'images 68 peuvent communiquer entre eux au moyen d'une connexion filaire. Bien entendu, ces moyens peuvent communiquer au moyen d'une connexion sans-fil.

Optionnellement, le dispositif de contrôle non destructif 60 peut comprendre des moyens de stockage, de préférence amovibles, configurés pour stocker les images acquises par les moyens d'acquisition d'images 62.

Les moyens de réception et d'affichage d'images 66, 68 sont connectés aux moyens d'acquisition et de transmission d'images 62, 64 au moyen d'une connexion sans-fil. Plus précisément, les moyens de réception d'images 66 sont connectés aux moyens de transmission d'images 64 au moyen d'une connexion sans-fil.

La connexion sans-fil peut être réalisée par tout type de connexion sans fil, et par exemple par ondes radio de type Wi-Fi ou Bluetooth.

Comme représenté sur la figure 4, le bouchon d'endoscopie 58 est adapté pour être fixé de manière amovible dans l'orifice d'endoscopie 54 du tambour du rotor radialement externe 28. Le bouchon d'endoscopie 58 est agencé de manière à obturer l'orifice d'endoscopie 54.

Le bouchon d'endoscopie 58 est amovible du bossage 56.

Le bouchon d'endoscopie 58 peut comprendre un tronc 72 fileté extérieurement, qui est apte à coopérer avec l'orifice interne taraudé du bossage 56 avec lequel communique l'orifice d'endoscopie 54 du rotor radialement externe 28. Le tronc 72 du bouchon d'endoscopie 58 traverse également l'orifice 29 de l'anneau d'étanchéité 27. Ainsi, le bouchon d'endoscopie 58 peut présenter un filetage 70 extérieur. Le bouchon d'endoscopie 58 peut comprendre une tête 74 dont le diamètre est supérieur au diamètre du tronc 72. Le tronc 72 et la tête 74 du bouchon d'endoscopie 58 peuvent être cylindriques, à base circulaire, ovale, polygonale ou quelconque. Les diamètres de l'orifice d'endoscopie 54 et de l'orifice 29 de l'anneau 27 peuvent être supérieurs au diamètre du tronc 72 du bouchon d'endoscopie 58.

En particulier, les moyens d'acquisition d'images 62 sont agencés à l'extrémité du tronc 72 du bouchon d'endoscopie 58 opposée à l'extrémité reliée à la tête 74.

Le diamètre de la tête 74 est supérieur au diamètre de l'orifice d'endoscopie 54 et de l'orifice interne du bossage 56, de sorte que, lorsque le bouchon d'endoscopie 58 est inséré dans l'orifice d'endoscopie 54, la tête 74 reste à l'extérieur du rotor radialement externe 28 et le tronc 72 soit dans l'orifice d'endoscopie 54, c'est-à-dire à l'intérieur du rotor radialement externe 28. Ainsi, le bouchon d'endoscopie 58 est fixé et les moyens d'acquisition d'images 62 peuvent acquérir des images de l'intérieur du rotor radialement externe 28, c'est-à-dire du rotor radialement interne 24.

Le bouchon d'endoscopie 58 est adapté pour être vissé dans l'orifice d'endoscopie 54, et plus précisément sur le bossage 56.

À la jonction entre la tête 74 et le tronc 72 du bouchon d'endoscopie 58, le bouchon d'endoscopie 58 comprend une surface 76 qui vient en butée contre la surface externe du bossage 56 lorsque le bouchon d'endoscopie 58 se trouve en position montée. La surface externe du bossage 56 est ainsi en contact avec le bouchon d'endoscopie 58.

Le bouchon d'endoscopie 58, et plus précisément la tête 76 du bouchon d'endoscopie 58, peut comprendre une empreinte 78 apte à recevoir une clé pour permettre de visser et/ou de dévisser le bouchon d'endoscopie 58 du bossage 56.

L'invention concerne également un procédé de contrôle non destructif d'un rotor d'une turbine contrarotative au moyen d'un dispositif de contrôle non destructif tel que décrit précédemment.

Le procédé peut comprendre une étape de démontage d'un bouchon 44 d'un orifice d'endoscopie 40 du carter 34. En particulier, le bouchon 44 peut être dévissé du bossage 42 du carter 34 pour être retiré de l'orifice d'endoscopie 40.

Ensuite, le procédé peut comprendre une étape de démontage du bouchon d'un orifice d'endoscopie 54 du rotor radialement externe 28. En particulier, le bouchon peut être dévissé du bossage 56 du rotor radialement externe 28 pour être retiré de l'orifice d'endoscopie 54. Ce bouchon est ensuite retiré par l'orifice d'endoscopie 40 du carter 34.

Le procédé comprend ensuite une étape de mise en place du bouchon d'endoscopie 58 dans l'orifice d'endoscopie 54 du rotor radialement externe 28. Le bouchon d'endoscopie 58 est inséré à travers l'orifice d'endoscopie 40 du carter 34. Le bouchon d'endoscopie 58 peut être vissé sur le bossage 56. Le bouchon d'endoscopie 58 est mis en place à l'aide d'un outil. L'empreinte 78 du bouchon d'endoscopie 58 permet de maintenir le bouchon d'endoscopie 58 sur l'outil.

En fonctionnement de la turbine basse pression, un bouchon dit classique, c'est-à-dire un bouchon qui ne permet de réaliser une endoscopie, est disposé dans l'orifice d'endoscopie 54 du rotor radialement externe 28. Ce bouchon est remplacé par le bouchon d'endoscopie 58 pour le procédé d'endoscopie selon l'invention.

Par la suite, le procédé comprend une étape de rotation des premier et deuxième rotors 24, 28 de la turbine contra rotative basse pression 22, et une acquisition d'images du rotor radialement interne 24 au moyen des moyens d'acquisition d'images 62. La rotation des premier et deuxième rotors 24, 28 peut être manuelle ou assistée. En particulier, le rotor radialement interne 24 tourne dans un premier sens de rotation et le deuxième rotor tourne dans le sens opposé au premier sens de rotation.

Le procédé comprend ensuite une étape de transmission des images acquises du rotor aux moyens de réception d'images 66, au moyen d'une communication sans-fil. Les images acquises par les moyens d'acquisition d'images 62 sont transférées aux moyens de transmission d'images 64, qui envoie les images aux moyens de réception d'images 66, qui les transfert aux moyens d'affichage d'images 68 où elles sont visualisées.

Une fois l'endoscopie terminée, le procédé peut ensuite comprendre une étape de démontage du bouchon d'endoscopie 58 de l'orifice d'endoscopie 54. En particulier, le bouchon d'endoscopie 58 peut être dévissé à l'aide d'un outil du bossage 56 pour être retiré de l'orifice d'endoscopie 54. Le bouchon d'endoscopie 58 est ensuite retiré par l'orifice d'endoscopie 40 du carter 34.

Ensuite, le procédé peut comprendre une étape de mise en place du bouchon de l'orifice d'endoscopie 54 du rotor radialement externe 28. Le bouchon est inséré à travers l'orifice d'endoscopie 40 du carter 34. En particulier, le bouchon peut être vissé à l'aide d'un outil sur le bossage 56.

Le procédé peut ensuite comprendre une étape de mise en place du bouchon 44 de l'orifice d'endoscopie 40 du carter 34. En particulier, le bouchon 44 peut être vissé à l'aide d'un outil sur le bossage 42.

Le bouchon d'endoscopie 58 peut être mis en place à chaque position axiale du rotor radialement externe 28 nécessaire, c'est-à-dire dans chaque orifice d'endoscopie 54 du rotor radialement externe 28. Ainsi, les étapes du procédé peuvent être répétées pour chaque orifice d'endoscopie 54 du rotor radialement externe 28.

Dans cette description, la turbine contra rotative a été décrite comme étant la turbine basse pression. Bien entendu, la turbine contrarotative selon l'invention peut être une turbine haute pression.

## Revendications

1. Turbine contra rotative (22) d'une turbomachine (10) d'aéronef, comprenant :
- un carter (34) comportant au moins un orifice d'endoscopie (40) configuré pour le passage d'un bouchon d'endoscopie (58) d'un dispositif de contrôle non destructif (60) à l'intérieur dudit carter (34), ledit dispositif de contrôle non destructif (60) comprenant ledit bouchon d'endoscopie (58) adapté pour être fixé dans un orifice d'endoscopie (54) d'un rotor radialement externe (28) de la turbine contra rotative (22), ledit bouchon d'endoscopie (58) comportant des moyens d'acquisition et de transmission d'images (62, 64) configurés pour acquérir des images du rotor et pour envoyer lesdites images acquises, et des moyens de réception et d'affichage d'images (66, 68) configurés pour recevoir et pour afficher lesdites images acquises, lesdits moyens de réception et d'affichage d'images (66, 68) étant connectés auxdits moyens d'acquisition et de transmission d'images (62, 64) au moyen d'une connexion sans-fil,
- un premier rotor (24), dit rotor radialement interne, relié à un premier arbre (26) de turbine et configuré pour tourner dans un premier sens de rotation,
- un deuxième rotor (28), dit rotor radialement externe, relié à un deuxième arbre (30) de turbine et configuré pour tourner dans un sens de rotation opposé au premier sens de rotation,
ledit deuxième rotor (28) étant agencé radialement autour dudit premier rotor (24),
ledit carter (34) étant agencé radialement autour dudit deuxième rotor (28),
et étant **caractérisée en ce que** ledit rotor radialement externe (28) présente un orifice d'endoscopie (54) dans lequel le bouchon d'endoscopie (58) du dispositif de contrôle non destructif (60) est fixé de manière amovible.

2. Turbine contra rotative (22) selon la revendication 1, dans laquelle le rotor radialement externe (28) comporte un bossage (56) qui s'étend en saillie radialement vers l'extérieur et autour de l'orifice d'endoscopie (54), ledit bossage (56) présentant un filetage agencé dans le prolongement de l'orifice d'endoscopie (58), le bouchon d'endoscopie (58) présentant un filetage (70) extérieur, et ledit bouchon d'endoscopie (58) est vissé sur ledit bossage (56).

3. Turbine contrarotative (22) selon l'une des revendications 1 ou 2, dans laquelle le bouchon d'endoscopie (58) présente un filetage (70) extérieur, l'orifice d'endoscopie (54) du rotor radialement externe (28) de la turbine contrarotative (22) étant au moins en partie un orifice taraudé, ledit bouchon d'endoscopie (58) étant adapté pour être vissé dans ledit orifice d'endoscopie (54).

4. Turbine contrarotative (22) selon l'une des revendications 1 à 3, dans laquelle la connexion entre les moyens de réception et d'affichage d'images (66, 68) et les moyens d'acquisition et de transmission d'images (62, 64) est réalisée par ondes radio.

5. Turbine contrarotative (22) selon l'une des revendications 1 à 4, dans laquelle le bouchon d'endoscopie (58) comprend une empreinte (78) apte à recevoir une clé pour permettre de visser et/ou de dévisser ledit bouchon d'endoscopie (58).

6. Procédé de contrôle non destructif d'un rotor d'une turbine contrarotative (22) selon l'une des revendications 1 à 5 au moyen d'un dispositif de contrôle non destructif (60), **caractérisé en ce que** ledit procédé comprend les étapes consistant en :
- une mise en place du bouchon d'endoscopie (58) dans l'orifice d'endoscopie (54) du rotor radialement externe (28) de la turbine contrarotative (22),
- une rotation des premier et deuxième rotors (24, 28) de la turbine contrarotative (22) et une acquisition d'images à l'intérieur du rotor radialement externe (28) de la turbine contrarotative (22), au moyen des moyens d'acquisition d'images (62),
- une transmission desdites images acquises aux moyens de réception d'images (66), au moyen d'une communication sans-fil.

7. Procédé selon la revendication précédente, dans lequel la rotation des premier et deuxième rotors (24, 28) de la turbine contrarotative (22) est manuelle ou assistée.

8. Procédé selon l'une des revendications 6 ou 7, comprenant, préalablement à la mise en place du bouchon d'endoscopie (58) dans l'orifice d'endoscopie (54) du rotor radialement externe (28) de la turbine contrarotative (22), les étapes consistant en :
- un démontage d'un bouchon (44) d'un orifice d'endoscopie (40) du carter (34) de la turbine contrarotative (22), et
- un démontage d'un bouchon (44) d'un orifice d'endoscopie (54) du rotor radialement externe (28) de la turbine contrarotative (22), ledit bouchon (44) étant retiré par l'orifice d'endoscopie (40) du carter (34) de la turbine contrarotative (22),
et, lors de la mise en place du bouchon d'endoscopie (58) dans l'orifice d'endoscopie (54) du rotor radialement externe (28) de la turbine contrarotative (22), ledit bouchon d'endoscopie (58) est inséré à travers l'orifice d'endoscopie (40) du carter (34) de la turbine contrarotative (22).

9. Procédé selon l'une des revendications 6 à 8, dans lequel le rotor radialement externe (28) de la turbine contrarotative (22) comporte un bossage (56) qui s'étend en saillie radialement vers l'extérieur et autour de l'orifice d'endoscopie (54), ledit bossage (56) présentant un filetage agencé dans le prolongement de l'orifice d'endoscopie (58), le bouchon d'endoscopie (58) présentant un filetage (70) extérieur, le procédé comprenant, lors de la mise en place du bouchon d'endoscopie (58) dans l'orifice d'endoscopie (54) du rotor radialement externe (28) de la turbine contra rotative (22), un vissage du bouchon d'endoscopie (58) sur ledit bossage (56).

## Patentansprüche

1. Gegenläufige Turbine (22) einer Turbomaschine (10) eines Flugzeugs, umfassend: - ein Gehäuse (34), das mindestens eine Endoskopieöffnung (40) aufweist, die für den Durchgang eines Endoskopieverschlusses (58) einer zerstörungsfreien Prüfvorrichtung (60) im Inneren des Gehäuses (34) konfiguriert ist, wobei die zerstörungsfreie Prüfvorrichtung (60) den Endoskopieverschluss (58) umfasst, der angepasst ist, um in einer Endoskopieöffnung (54) eines radial äußeren Rotors (28) der gegenläufigen Turbine (22) befestigt zu werden, wobei der Endoskopieverschluss (58) Bilderfassungs- und -übertragungsmittel (62, 64) aufweist, die zum Erfassen von Bildern des Rotors und zum Senden der erfassten Bilder konfiguriert sind, und Bildempfangs- und
- anzeigemittel (66, 68), die zum Empfangen und Anzeigen der erfassten Bilder konfiguriert sind, wobei die Bildempfangs- und -anzeigemittel (66, 68) mit den Bilderfassungs- und -übertragungsmitteln (62, 64) über eine drahtlose Verbindung verbunden sind,
- einen ersten Rotor (24), den radial inneren Rotor, der mit einer ersten Turbinenwelle (26) verbunden und konfiguriert ist, um sich in einer ersten Drehrichtung zu drehen,
- einen zweiten Rotor (28), den radial äußeren Rotor, der mit einer zweiten Turbinenwelle (30) verbunden und konfiguriert ist, um sich in einer der ersten Drehrichtung entgegengesetzten Drehrichtung zu drehen,
wobei der zweite Rotor (28) radial um den ersten Rotor (24) angeordnet ist,
wobei das Gehäuse (34) radial um den zweiten Rotor (28) herum angeordnet ist,
und **dadurch gekennzeichnet ist, dass** der radial äußere Rotor (28) eine Endoskopieöffnung (54) aufweist, in welcher der Endoskopieverschluss (58) der zerstörungsfreien Prüfvorrichtung (60) lösbar befestigt ist.

2. Gegenläufige Turbine (22) nach Anspruch 1, wobei der radial äußere Rotor (28) einen Vorsprung (56) aufweist, der sich radial nach außen und um die Endoskopieöffnung (54) herum vorstehend erstreckt, der Vorsprung (56) ein Gewinde aufweist, das in der Verlängerung der Endoskopieöffnung (58) angeordnet ist, der Endoskopieverschluss (58) ein Außengewinde (70) aufweist, und der Endoskopieverschluss (58) auf den Vorsprung (56) geschraubt ist.

3. Gegenläufige Turbine (22) nach einem der Ansprüche 1 oder 2, wobei der Endoskopieverschluss (58) ein Außengewinde (70) aufweist, wobei die Endoskopieöffnung (54) des radial äußeren Rotors (28) der gegenläufigen Turbine (22) mindestens teilweise eine Gewindeöffnung ist, wobei der Endoskopieverschluss (58) angepasst ist, um in die Endoskopieöffnung (54) geschraubt zu werden.

4. Gegenläufige Turbine (22) nach einem der Ansprüche 1 bis 3, wobei die Verbindung zwischen den Bildempfangs- und -anzeigemitteln (66, 68) und den Bilderfassungs- und - übertragungsmitteln (62, 64) über Funkwellen ausgeführt wird.

5. Gegenläufige Turbine (22) nach einem der Ansprüche 1 bis 4, wobei der Endoskopieverschluss (58) eine Vertiefung (78) umfasst, die geeignet ist, einen Schlüssel aufzunehmen, um das Einschrauben und/oder Abschrauben des Endoskopieverschlusses (58) zu ermöglichen.

6. Verfahren zum zerstörungsfreien Prüfen eines Rotors einer gegenläufigen Turbine (22) nach einem der Ansprüche 1 bis 5 mittels einer zerstörungsfreien Prüfvorrichtung (60), **dadurch gekennzeichnet, dass** das Verfahren die Schritte umfasst, bestehend aus:
- einem Einsetzen des Endoskopieverschlusses (58) in die Endoskopieöffnung (54) des radial äußeren Rotors (28) der gegenläufigen Turbine (22),
- einer Drehung des ersten und zweiten Rotors (24, 28) der gegenläufigen Turbine (22) und einer Bilderfassung im Inneren des radial äußeren Rotors (28) der gegenläufigen Turbine (22) mittels der Bilderfassungsmittel (62),
- einer Übertragung der erfassten Bilder an die Bildempfangsmittel (66), mittels drahtloser Kommunikation.

7. Verfahren nach dem vorstehenden Anspruch, wobei die Drehung des ersten und zweiten Rotors (24, 28) der gegenläufigen Turbine (22) manuell oder unterstützt erfolgt.

8. Verfahren nach einem der Ansprüche 6 oder 7, umfassend vor dem Einsetzen des Endoskopieverschlusses (58) in die Endoskopieöffnung (54) des radial äußeren Rotors (28) der gegenläufigen Turbine (22) die Schritte, bestehend aus:
- einem Ausbau eines Endoskopieverschlusses (44) aus einer Endoskopieöffnung (40) des Gehäuses (34) der gegenläufigen Turbine (22), und
- einem Ausbau eines Endoskopieverschlusses (44) aus einer Endoskopieöffnung (54) des radial äußeren Rotors (28) der gegenläufigen Turbine (22), wobei der Endoskopieverschluss (44) durch die Endoskopieöffnung (40) aus dem Gehäuse (34) der gegenläufigen Turbine (22) herausgezogen wird,
und beim Einsetzen des Endoskopieverschlusses (58) in die Endoskopieöffnung (54) des radial äußeren Rotors (28) der gegenläufigen Turbine (22) der Endoskopieverschluss (58) durch die Endoskopieöffnung (40) des Gehäuses (34) der gegenläufigen Turbine (22) hindurch eingesetzt wird.

9. Verfahren nach einem der Ansprüche 6 bis 8, wobei der radial äußere Rotor (28) der gegenläufigen Turbine (22) einen Vorsprung (56) aufweist, der sich vorspringend radial nach außen und um die Endoskopieöffnung (54) herum erstreckt, wobei der Vorsprung (56) ein Gewinde aufweist, das in Verlängerung der Endoskopieöffnung (58) angeordnet ist, wobei der Endoskopieverschluss (58) ein Außengewinde (70) aufweist, wobei das Verfahren beim Einsetzen des Endoskopieverschlusses (58) in die Endoskopieöffnung (54) des radial äußeren Rotors (28) der gegenläufigen Turbine (22) ein Verschrauben des Endoskopieverschlusses (58) auf den Vorsprung (56) umfasst.

## Claims

1. A counter-rotating turbine (22) of an aircraft turbomachine (10), comprising:
- a casing (34) comprising at least one endoscopy port (40) configured for an endoscopy plug (58) of a non-destructive testing device (60) to pass into said casing (34), said non-destructive testing device (60) comprising said endoscopy plug (58) adapted to be secured in a endoscopy port (54) of a radially outer rotor (28) of the counter-rotating turbine (22), said endoscopy plug (58) comprising means for acquiring and transmitting images (62, 64) configured to acquire images of the rotor and to send said acquired images, and means for receiving and displaying images (66, 68) configured to receive and display said acquired images, said means for receiving and displaying images (66, 68) being connected to said means for acquiring and transmitting images (62, 64) by means of a wireless connection,
- a first rotor (24), referred to as radially inner rotor, connected to a first turbine shaft (26) and configured to rotate in a first direction of rotation,
- a second rotor (28), referred to as radially outer rotor, connected to a second turbine shaft (30) and configured to rotate in a direction of rotation opposite to the first direction of rotation,
said second rotor (28) being arranged radially around said first rotor (24),
said casing (34) being arranged radially around said second rotor (28),
and being **characterized in that** said radially outer rotor (28) has an endoscopy port (54) into which the endoscopy plug (58) of the non-destructive testing device (60) is releasably secured.

2. The counter-rotating turbine (22) according to claim 1, wherein the radially outer rotor (28) comprises a boss (56) extending radially outwardly and around the endoscopy port (54), said boss (56) having a thread arranged in continuation of the endoscopy port (54), the endoscopy plug (58) having an external thread (70), and said endoscopy plug (58) is screwed onto said boss (56).

3. The counter-rotating turbine (22) according to one of claims 1 or 2, wherein the endoscopy plug (58) has an external thread (70), the endoscopy port (54) of the radially outer rotor (28) of the counter-rotating turbine (22) being at least in part an internally threaded port, said endoscopy plug (58) being adapted to be screwed into said endoscopy port (54).

4. The counter-rotating turbine (22) according to any one of claims 1 to 3, wherein the connection between the means for receiving and displaying images (66, 68) and the means for acquiring and transmitting images (62, 64) is made by radio waves.

5. The counter-rotating turbine (22) according to one of claims 1 to 4, wherein the endoscopy plug (58) comprises a cavity (78) adapted to receive a wrench to allow said endoscopy plug (58) to be screwed and/or unscrewed.

6. A method for non-destructive testing of a rotor of a counter-rotating turbine (22) according to any of claims 1 to 5 by means of a non-destructive testing device (60), **characterized in that** said method comprises the steps of:
- placing the endoscopy plug (58) in the endoscopy port (54) of the radially outer rotor (28) of the counter-rotating turbine (22),
- rotating the first and second rotors (24, 28) of the counter-rotating turbine (22) and an image acquisition within the radially outer rotor (28) of the counter-rotating turbine (22), by means of the means for acquiring images (62),
- transmitting said acquired images to the means for receiving images (66) by means of a wireless communication.

7. The method according to the preceding claim, wherein the rotation of the first and second rotors (24, 28) of the counter-rotating turbine (22) is manual or assisted.

8. The method according to any of claims 6 or 7, comprising, prior to placing the endoscopy plug (58) in the endoscopy port (54) of the radially outer rotor (28) of the counter-rotating turbine (22), the steps of:
- removing a plug (44) from an endoscopy port (40) of the casing (34) of the counter-rotating turbine (22), and
- removing a plug (44) from an endoscopy port (54) of the radially outer rotor (28) of the counter-rotating turbine (22), said plug (44) being removed through the endoscopy port (40) of the casing (34) of the counter-rotating turbine (22),
and, upon placing the endoscopy plug (58) in the endoscopy port (54) of the radially outer rotor (28) of the counter-rotating turbine (22), said endoscopy plug (58) is inserted through the endoscopy port (40) of the casing (34) of the counter-rotating turbine (22).

9. The method according to any of claims 6 to 8, wherein the radially outer rotor (28) of the counter-rotating turbine (22) comprises a boss (56) which extends radially outwardly and around the endoscopy port (54), said boss (56) having a thread arranged in continuation of the endoscopy port (54), the endoscopy plug (58) having an external thread (70), the method comprising, upon placing the endoscopy plug (58) in the endoscopy port (54) of the radially outer rotor (28) of the counter-rotating turbine (22), screwing the endoscopy plug (58) onto said boss (56).
